# EUROPÄISCHE PATENTSCHRIFT

(11) **EP 0 989 907 B1**
(45) Veröffentlichungstag und Bekanntmachung des Hinweises auf die Patenterteilung: **09.01.2002**
(21) Anmeldenummer: 98922573.5
(22) Anmeldetag: 11.06.1998
(51) Int. Cl.: B01J 19/00, F16L 39/02, B01L 3/00, F28F 9/26, B01L 9/06, B01L 7/00

(54) **VORRICHTUNG ZUR PARALLELEN DURCHFÜHRUNG EINER VIELZAHL VON CHEMISCHEN, BIOCHEMISCHEN ODER PHYSIKALISCHEN VERFAHREN**
DEVICE FOR CONDUCTING A PLURALITY OF CHEMICAL, BIOCHEMICAL OR PHYSICAL PROCEDURES IN PARALLEL
DISPOSITIF PERMETTANT D'EFFECTUER EN PARALLELE UNE PLURALITE DE PROCEDES CHIMIQUES, BIOCHIMIQUES OU PHYSIQUES

(30) Priorität: 16.06.1997 CH 146797
(43) Veröffentlichungstag der Anmeldung: 05.04.2000
(73) Patentinhaber: Chemspeed Ltd., 4302 Augst (CH)
(72) Erfinder: GÜLLER, Rolf, CH-5027 Herznach (CH); MUNCH, Séraphin, F-68170 Rixheim (FR); GEES, Thomas, CH-7416 Almens (CH); TSCHIRKY, Hansjörg, CH-4107 Ettingen (CH)
(74) Vertreter: Bollhalder, Renato
(86) Internationale Anmeldenummer: CH9800253
(87) Internationale Veröffentlichungsnummer: WO9857738

(56) Entgegenhaltungen:
- WO-A-89/10188
- WO-A-93/17785
- WO-A-93/24233
- WO-A-97/09353
- US-A- 4 493 476
- US-A- 5 503 805

## Beschreibung

Die vorliegende Erfindung bezieht sich auf eine Vorrichtung zur parallelen Durchführung einer Vielzahl von chemischen, biochemischen oder physikalischen Verfahren, wie sie im Oberbegriff des unabhängigen Patentanspruchs 1 definiert ist.

In der chemischen Forschung der Pharmaindustrie und der Universitäten wird es immer wichtiger, möglichst schnell eine grosse Anzahl von potentiellen Wirkstoffen ausfindig zu machen und diese dann durchzutesten. Ein Teil der chemischen Forschung bezieht sich daher heutzutage auf kombinatorische Chemie, parallele Synthese und Hochgeschwindigkeitschemie. Von zentraler Bedeutung ist hierbei die Möglichkeit, bekannte oder neue chemische Reaktionstypen mit möglichst geringen Anpassungen möglichst breit einsetzen zu können.

Es wurden daher verschiedenartigste Vorrichtungen zur parallelen Durchführung einer Vielzahl von chemischen, biochemischen oder physikalischen Verfahren geschaffen, die aber alle entweder nur für spezielle Anwendungen geeignet, zu kompliziert aufgebaut, zu gross oder bedienerunfreundlich sind und/oder mit Hilfe derer die einzelnen Verfahrensschritte nicht genügend automatisiert werden können.

Von der Firma Bohdan Europe, Frankreich, wird unter der Bezeichnung RAM Synthesizer BHD1524 eine derartige Vorrichtung vertrieben, die einen Schaltblock umfasst, an dem eine Vielzahl von Reaktionsgefässen abnehmbar befestigt sind. Den Reaktionsgefässen werden durch einen Gaskanal in einer Reaktionsgefässbefestigungsplatte Gase und mittels hohler Nadeln durch den Schaltblock hindurch Flüssigkeiten zugeführt und/oder entnommen, wobei die Nadeln im Schaltblock angeordnete Septen durchstechen, die einen Verschluss der Reaktionsgefässe bilden.

Diese Vorrichtung weist den Nachteil auf, dass zum Schütteln der Reaktionsgefässe der ganze Schaltblock zusammen mit den Reaktionsgefässen auf eine separate Schütteleinrichtung transferiert werden muss. Ein Schütteln während der Flüssigkeitszuführung, was oft notwendig oder sogar unabdingbar ist, ist nicht möglich. Zudem werden alle Reaktionen unter Septen durchgeführt, was insbesondere bei aggressiven Lösungsmitteln problematisch ist, da die Septen von diesen beeinträchtigt werden können. Dies kann einerseits zu einem Dichtigkeitsverlust der Septen und anderseits zu einer Verunreinigung des Reaktionsmediums führen. Des weiteren verlieren die Septen nach mehrmaligem Durchstechen an Dichtigkeit, so dass der Einsatz von Vakuum oder Überdruck ohne manuelle Eingriffe nicht in ausreichendem Masse möglich ist. Ausserdem können die Reaktionsgefässe nicht automatisch vollständig geöffnet und geschlossen werden.

Angesichts der Nachteile der bisher bekannten, oben beschriebenen Vorrichtungen liegt der Erfindung die folgende Aufgabe zugrunde. Zu schaffen ist eine Vorrichtung zur parallelen Durchführung einer Vielzahl von chemischen, biochemischen oder physikalischen Verfahren der eingangs erwähnten Art, mit der mehrere verschiedene Verfahrensschritte, insbesondere der Einsatz von Vakuum oder Überdruck und die Zuführung und Entnahme von Flüssigkeiten, Gasen und/oder Feststoffen vorgenommen werden können, ohne dass der bzw. die Schaltblöcke deplaziert oder umgebaut werden müssen.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht darin, dass bei einer Vorrichtung zur parallelen Durchführung einer Vielzahl von chemischen, biochemischen oder physikalischen Verfahren, mit mindestens einem Schaltblock, an dem eine Vielzahl von Reaktionsgefässen abnehmbar oder fix befestigt sind, wobei den Reaktionsgefässen durch den Schaltblock hindurch Flüssigkeiten, Gase und/oder Feststoffe zuführbar und/oder entnehmbar sind, der Schaltblock mindestens eine Gaskanalplatte mit mindestens einem Gaskanal und mindestens eine benachbarte Funktionsplatte umfasst, wobei mindestens eine dieser Platten bezüglich der anderen verschiebbar angeordnet ist. Die Gaskanalplatte bzw. -platten und die Funktionsplatte bzw. -platten weisen durchgehende Löcher, durchgehende Schlitze und/oder Vertiefungen auf, die jeweils bei mindestens einer Plattenstellung einander so gegenüberliegen, dass
a) zumindest einem Reaktionsgefäss über den bzw. mindestens einen Gaskanal Gase und/oder Flüssigkeiten zuführ- oder entnehmbar sind bzw.
b) zumindest einem Reaktionsgefäss sowohl durch die bzw. mindestens eine Gaskanalplatte als auch durch die bzw. mindestens eine Funktionsplatte hindurch Gase, Flüssigkeiten und/oder Feststoffezuführ- oder entnehmbar sind.

Mit dieser Vorrichtung können je nach Plattenstellung allen oder einzelnen Reaktionsgefässen über den oder die Gaskanäle Flüssigkeiten oder Gase zugeführt oder entnommen und/oder ein Vakuum oder ein Überdruck in den Reaktionsgefässen erzeugt und/oder durch einander gegenüberliegende durchgehende Löcher oder Schlitze in der oder den Gaskanalplatten und in der oder den Funktionsplatten den Reaktionsgefässen mit oder ohne Druckausgleich Gase, Flüssigkeiten und/oder Feststoffe zugeführt oder entnommen werden. Der Verschluss der Reaktionsgefässe erfolgt durch die bzw. mindestens eine Funktionsplatte in bestimmten Plattenstellungen, so dass Septen nicht unbedingt notwendig sind. Auf den Einsatz eines Septums kann daher verzichtet werden, oder es kann allenfalls so angeordnet werden, dass es nur in bestimmten Plattenstellungen als Verschluss für die Reaktionsgefässe dient. Damit können die oben erwähnten Probleme der Vorrichtungen des Standes der Technik vermieden werden, bei denen Septen ständig den Verschluss der Reaktionsgefässe bilden.

Dank der oder den Funktionsplatten können verschiedene Verfahrensschritte durchgeführt werden, ohne dass der betreffende Schaltblock deplaziert oder umgebaut werden muss. Die Funktionsplatte bzw. -platten ermöglichen auch eine kompakte Konstruktion der Schaltblöcke.

Zur Bedienung der Schaltblöcke und der Reaktionsgefässe können ein kommerziell erhältlicher Sampler kombiniert mit einem Dilutor, z.B. der Gilson ASPEC XL der Firma Gilson, Frankreich, oder ein anderer Roboter bzw. eine andere Automationseinheit eingesetzt werden, die eventuell an die erfindungsgemässen Schaltblöcke und Reaktionsgefässe angepasst werden.

Mit Vorteil sind die Reaktionsgefässe mittels beweglicher Kupplungen am Schaltblock befestigt. Die Reaktionsgefässe können dann geschüttelt werden, ohne dass sich der betreffende Schaltblock mitbewegt. Ausserdem liegt nicht das ganze Gewicht der Reaktionsgefässe inkl. Inhalt auf der Schütteleinrichtung auf, so dass relativ schwache Schütteleinrichtungen ausreichen, die relativ geringe Vibrationen erzeugen, was den Einsatz von vibrationsempfindlichen Peripheriegeräten, wie z.B. vibrationsempfindliche Sampler, Roboter oder andere Automationseinrichtungen zur Zuführung und/oder Entnahme von Flüssigkeiten und/oder Feststoffen überhaupt erst ermöglicht. Ein wesentlicher Vorteil liegt zudem darin, dass auch während des Schüttelns problemlos mit einem Zuführ- und/oder Entnahmewerkzeug, wie z.B. hohle Nadel, Greifer oder Löffel, eine Flüssigkeit oder ein Feststoff einem Reaktionsgefäss zugegeben und/oder entnommen. werden kann, was bei den bisher bekannten Vorrichtungen nicht der Fall ist.

Derartige Kupplungen weisen vorteilhafterweise zwischen einem reaktionsgefässseitigen Teil und einem schaltblockseitigen Teil einen Faltbalg auf. Als Alternativen zum Faltbalg sind z.B. ein flexibles Rohr oder ein Kugelgelenk denkbar.

Für gewisse Anwendungen ist vorzugsweise zwischen mindestens einem der Reaktionsgefässe und dem Schaltblock ein abnehmbarer Rückflusskühler angeordnet, der ein Kühlrohr aufweist, das so weit in das Reaktionsgefäss hineinreicht, dass im Reaktionsgefäss im Verbindungsbereich von Reaktionsgefäss und Rückflusskühler oder unterhalb davon gekühlt werden kann. Mit Vorteil ist dabei das Kühlrohr nur in der einen Hälfte des Öffnungsquerschnitts des Reaktionsgefässes angeordnet.

Auf diese Weise kann gleichzeitig zur Rückflusskühlung z.B. mit einem Zuführwerkzeug oder über den bzw. einen Gaskanal dem Reaktionsgefäss eine Flüssigkeit zugeführt, ein Schutzgas, gasförmiger Reaktand, gasförmiger Katalysator oder ein Feststoff zugegeben und/oder ein Druckausgleich erreicht werden. Alle diese Eingriffe in das Reaktionsgefäss erfolgen durch die selbe Öffnung, was dazu beiträgt, dass die erfindungsgemässe Vorrichtung relativ kompakt und kostengünstig gebaut werden kann und wartungs- und bedienungsfreundlich ist.

Im folgenden wird die erfindungsgemässe Vorrichtung zur parallelen Durchführung einer Vielzahl von chemischen, biochemischen oder physikalischen Verfahren unter Bezugnahme auf die beigefügten Zeichnungen anhand eines Ausführungsbeispiels detaillierter beschrieben. Es zeigen:
- Fig. 1 -: eine Perspektivansicht eines Ausführungsbeispiels einer erfindungsgemässen Vorrichtung zur parallelen Durchführung einer Vielzahl von chemischen, biochemischen oder physikalischen Verfahren;
- Fig. 2 -: einen Schaltblock der Vorrichtung von Fig. 1 mit einer Kupplung und einem daran angebrachten Reaktionsgefäss;
- Fig. 3 -: den Schaltblock mit Kupplung von Fig. 2 in seine Einzelteile zerlegt;
- Fig. 4 -: die Unterseite der Funktionsplatte des Schaltblocks von Fig. 3;

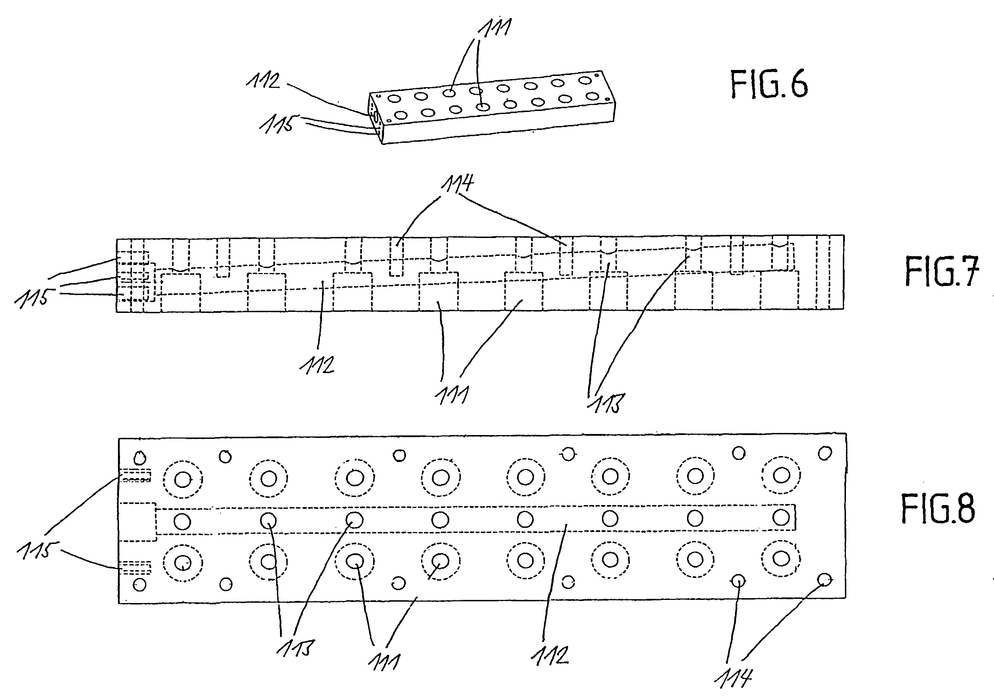

- Fig. 5 -: eine alternative Ausführungsvariante der Oberseite der Funktionsplatte des Schaltblocks von Fig. 3;
- Fig. 6 -: die Unterseite der Gaskanalplatte des Schaltblocks von Fig. 3;
- Fig. 7 -: eine Seitenansicht der Gaskanalplatte von Fig. 6, wobei nicht sichtbare Teile gestrichelt dargestellt sind;
- Fig. 8 -: eine Draufsicht auf die Gaskanalplatte von Fig. 6, wobei nicht sichtbare Teile gestrichelt dargestellt sind;

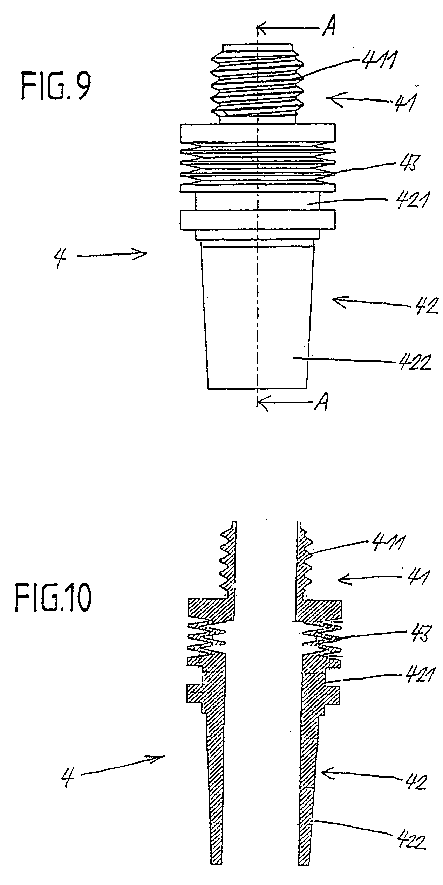

- Fig. 9 -: eine Seitenansicht einer Kupplung;
- Fig. 10 -: einen Schnitt durch die Kupplung von Fig. 9 gemäss der Linie A-A;

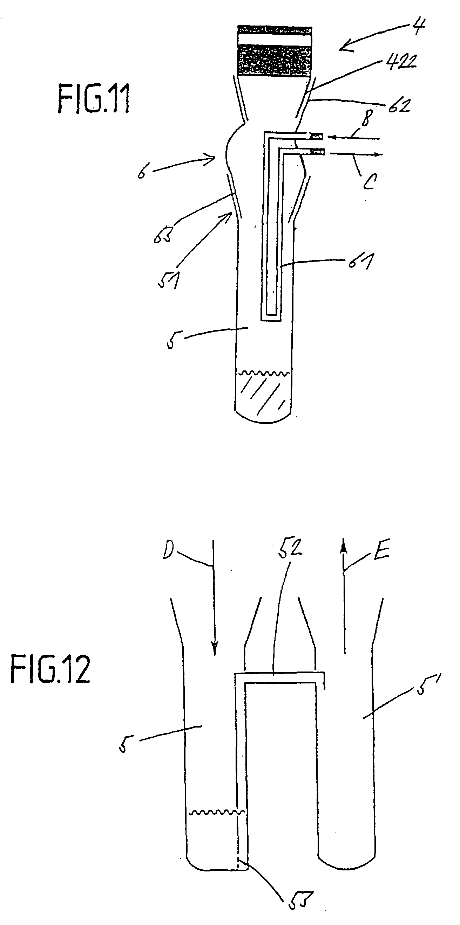

- Fig. 11 -: einen zwischen einem Reaktionsgefäss und einer Kupplung angeordneten Rückflusskühler;
- Fig. 12 -: zwei mit einem Rohr verbundene Reaktionsgefässe mit einer Fritte in einem der beiden Reaktionsgefässe und

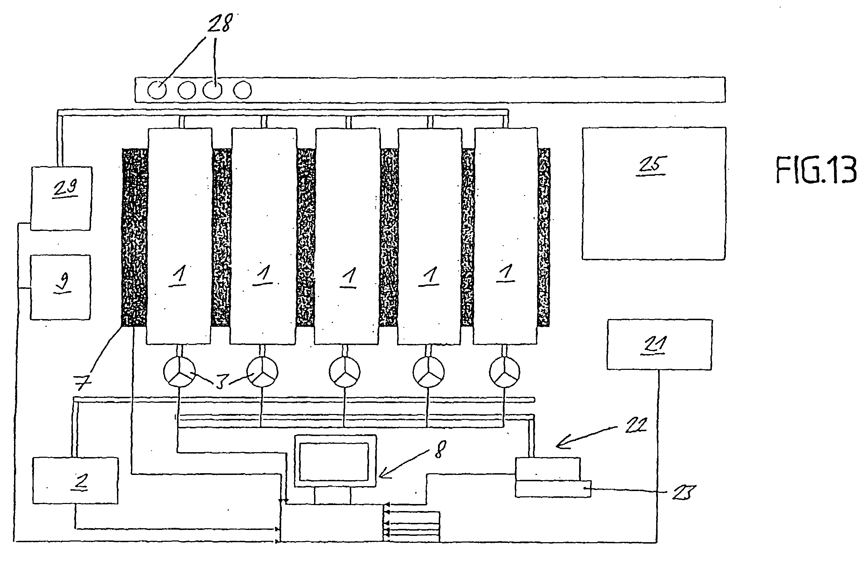

- Fig. 13 -: ein schematisches Schaltbild einer erfindungsgemässen Vorrichtung zur parallelen Durchführung einer Vielzahl von chemischen, biochemischen oder physikalischen Verfahren.

### Figur 1

Das dargestellte Ausführungsbeispiel einer erfindungsgemässen Vorrichtung zur parallelen Durchführung einer Vielzahl von chemischen, biochemischen oder physikalischen Verfahren umfasst ein Trägergestell 24, in das zwei Schaltblöcke 1 eingesetzt sind, zwischen denen noch Platz für drei weitere Schaltblöcke ist. Die Befestigung der Schaltblöcke 1 erfolgt mittels Schrauben, wofür das Trägergestell 24 Schraubenlöcher 241 aufweist. Am Trägergestell 24 ist ausserdem ein Eduktgefässgestell 25 angeordnet, das zur Aufbewahrung von Eduktgefässen 250 dient. Zum Halten von zusätzlichen Eduktfläschchen oder Probeentnahmefläschchen sind zwei Halterungsblöcke 27 oder Auffangplatten vorgesehen. Lösungsmittelzapfstellen 28 ermöglichen eine Entnahme von Lösungsmitteln aus Lösungsmitteltanks.

Ein Arm 26 eines Samplers dient zum Tragen einer hohlen Nadel für das Handling von Ausgangsstoffen oder Produkten. Die Eckpunkte der Zugriffsfläche der hohlen Nadel sind mit Nadeln 261 markiert.

Ebenfalls zur Vorrichtung gehören, aber nicht dargestellt, eine Schütteleinrichtung, eine Vakuumpumpe, mehrere Gaszuführeinrichtungen, Ventile für die Gaszuführeinrichtungen bzw. die Vakuumpumpe, Kryostate, mehrere Steuereinheiten, ein Dilutor sowie eine Vielzahl von Reaktionsgefässen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

### Figuren 2 und 3

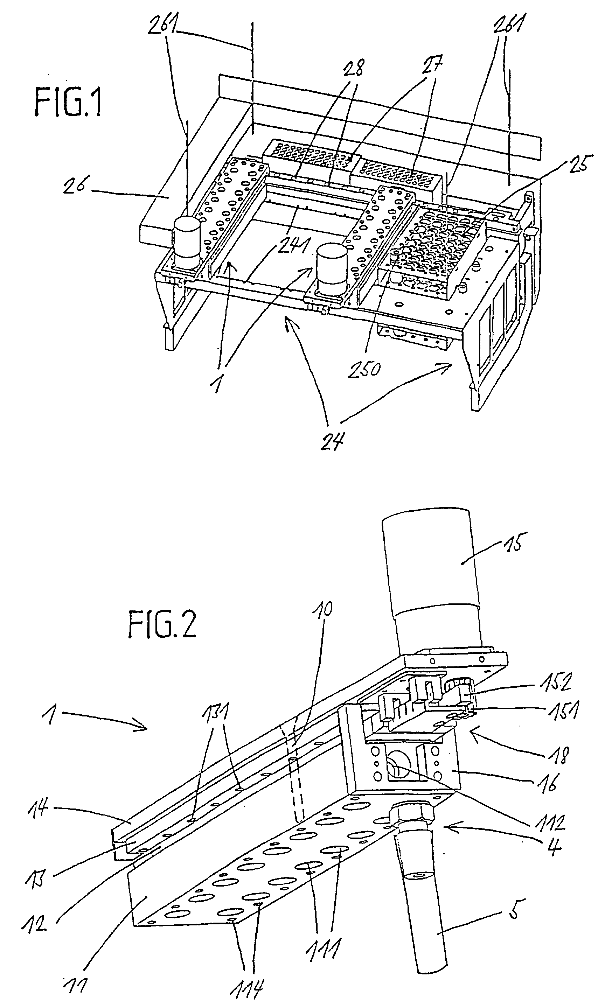

Ein in der Vorrichtung von Fig. 1 verwendeter Schaltblock 1 weist eine Gaskanalplatte 11, eine Funktionsplatte 12 in Form einer Schieberplatte, eine Gegenplatte 13 und eine Stützplatte 14 auf, die übereinander liegen. Die Stützplatte 14, die Gegenplatte 13 und die Gaskanalplatte 11 werden durch Schrauben 10 zusammengehalten, die in Schraubenlöchern 141, 131 und 114 angeordnet sind. Eine Stirnplatte 16 mit Bolzenlöchern 162 und Schraubenlöchern 161 verbindet diese drei Platten zusätzlich mittels Bolzen 19 und nicht dargestellten Schrauben. Die Funktionsplatte 12 ist verschiebbar zwischen der Gaskanalplatte 11 und der Gegenplatte 13 angeordnet. Sie wird von einem Schrittmotor 15 über ein Ritzel 151 und eine Zahnstange 152 angetrieben. Mit der Bezugsziffer 18 sind Befestigungs-, Distanz- und Positionierungselemente bezeichnet.

Die Stützplatte 14 weist neben den Schraubenlöchern 141 noch zwei Reihen durchgehender Löcher 142 auf, welche es einer Nadel oder einem sonstigen festen Gegenstand ermöglichen, die Platte zu durchdringen. Diese Platte dient vorwiegend zur Stabilisierung, zum Schutz und zum Halten der Antriebseinrichtung für die Funktionsplatte 12. Daneben weist sie noch vier Löcher 143 auf, unter welchen Lichtschranken angeordnet sind. Diese können zur Steuerung der Funktionsplattenbewegung, beispielsweise durch eine Nadel ausgelöst, benutzt werden. Eine Platine 17 dient als Sammelstelle für die Lichtschrankensignale.

Die Gegenplatte 13 weist Schraubenlöcher 131 und durchgehende Löcher 132 auf, die den Schraubenlöchern 141 und durchgehenden Löchern 142 der Stützplatte 14 gegenüberliegen. Sie besteht vorzugsweise aus einem hochwertigeren Material und vor allem ihre der Funktionsplatte 12 zugewandte Seite ist exakter beschaffen als die Stützplatte 14.

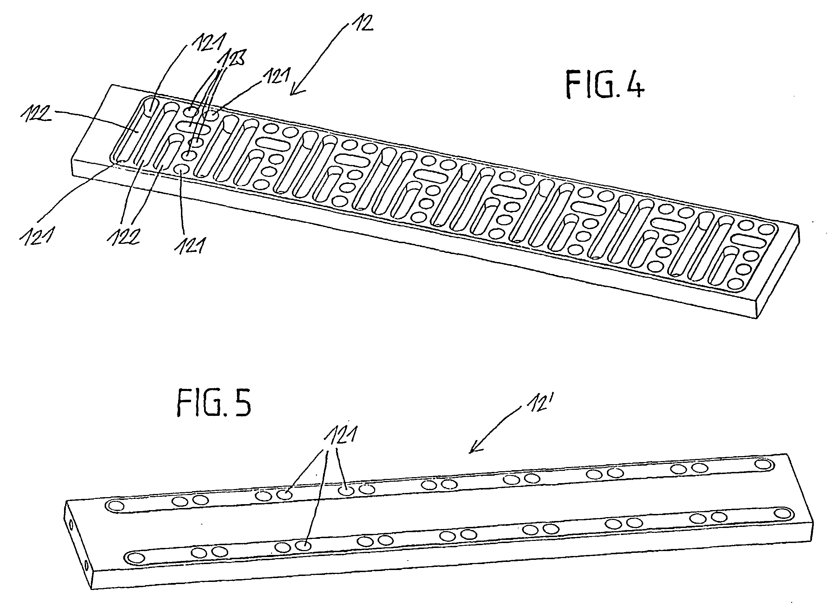

Die Funktionsplatte 12 ist schmaler als die Gegenplatte 13 und die Gaskanalplatte 11, so dass sie genau zwischen die Verbindungsschrauben dieser beiden Platten passt und von diesen Verbindungsschrauben auch gleich geführt wird. Sie umfasst durchgehende Löcher 121, deren Ränder gegenüber der Plattenoberfläche leicht erhöht sind und so für eine gute Abdichtung sorgen. Auf der Unterseite weist sie zudem noch Vertiefungen auf, die weiter unten im Zusammenhang mit Fig. 4 näher erläutert werden.

Die Gaskanalplatte 11 umfasst neben den Schraubenlöchern 114 und den durchgehenden Löchern 111 noch Gaskanallöcher 113, die in einem zentralen Gaskanal 112 enden. An das offene Ende des Gaskanals 112 können über ein Ventil, vorzugsweise Mehrfachventil, eine entsprechende Anzahl Vakuumpumpen und Gaszuführeinrichtungen angeschlossen werden.

Es besteht auch noch die Möglichkeit, zwischen der Gegenplatte 13 und Stützplatte 14 ein Septum aus einem mit einer Nadel durchdringbarem Material anzuordnen, welches als zusätzliche, fakultative Abdichtung der Reaktionsgefässöffnungen bei einander gegenüberliegenden durchgehenden Löchern 111 bzw. 121 der Gaskanalplatte 11 bzw. Funktionsplatte 12 wirken.

Weiter unten genauer beschriebene Kupplungen 4 dienen zum abnehmbaren Befestigen von Reaktionsgefässen 5 am Schaltblock 1. Jedem durchgehenden Loch 111 der Gaskanalplatte 11 kann ein Reaktionsgefäss 5 zugeordnet werden.

Die einzelnen Teile des Schaltblocks 1 und die Kupplungen 4 können beispielsweise aus Metall, insbesondere rostfreiem Stahl, Messing oder Titanlegierungen, Glas, insbesondere SiO₂-Glas, Kunststoff, insbesondere Teflon, Polypropylen oder Polyethylen, Naturstein, insbesondere Granit oder Gneis, oder Keramik, insbesondere AlO₃ oder MACOR® , bestehen.

### Figur 4

Die Unterseite der Funktionsplatte 12 weist hier ein sich acht mal wiederholendes Muster auf. Ein einzelnes Muster umfasst vier verschiedene Anordnungen von durchgehenden Löchern 121, Vertiefungen 122 und Schliessflächen 123, die je nach Plattenstellung den durchgehenden Löchern 111 und den Gaskanallöchern 113 der Gaskanalplatte 11 gegenüberliegen und so vier verschiedene Funktionsplattenfunktionen definieren.

Die erste Anordnung weist zwei durchgehende Löcher 121 und zwischen diesen eine Vertiefung 122 auf. Die erste Funktionsplattenfunktion lässt also beide zugeordneten Reaktionsgefässe 5 vollständig offen, d.h. sowohl für Zuführ- und/oder Entnahmewerkzeuge als auch gegenüber dem Gaskanal 112.

Bei der zweiten Anordnung ist eine einzige lange Vertiefung 122 vorhanden. Die zweite Funktionsplattenfunktion schliesst die beiden zugeordneten Reaktionsgefässe 5 für Zuführ- und/oder Entnahmewerkzeuge ab, lässt sie aber gegenüber dem Gaskanal 112 offen.

Die dritte Anordnung umfasst eine Vertiefung 122 und zwei Schliessflächen 123. Die dritte Funktionsplattenfunktion schliesst ein zugeordnetes Reaktionsgefäss 5 vollständig ab, während sie das andere zugeordnete Reaktionsgefäss 5 nur gegenüber dem Gaskanal 112 offen lässt.

Bei der vierten Anordnung sind zwei durchgehende Löcher 121 und drei Vertiefungen 122 vorhanden. Die vierte Funktionsplattenfunktion lässt die beiden zugeordneten Reaktionsgefässe 5 für Zuführ- und/oder Entnahmewerkzeuge offen, schliesst sie aber gegenüber dem Gaskanal 112 ab.

Die Ränder der durchgehenden Löcher 111, der Vertiefungen 122 und der Schliessflachen 123 sind insgesamt leicht über die Plattenoberfläche erhöht und sorgen so für eine gute Abdichtung.

Selbstverständlich sind auch andere Anordnungen der durchgehenden Löcher 111, der Vertiefungen 122 und der Schliessflächen 123 und somit andere Funktionsplattenfunktionen oder andere Muster denkbar.

### Figur 5

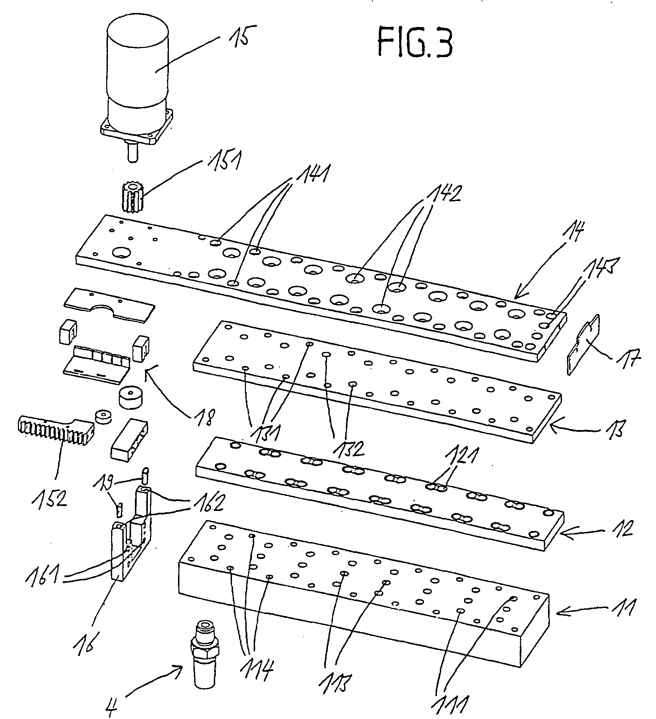

Diese Funktionsplatte 12' unterscheidet sich von der Funktionsplatte 12 in Fig. 3 dadurch, dass auf der Oberseite nicht nur gerade die Ränder der durchgehenden Löcher 121 über die Plattenoberfläche erhöht sind, sondern auch die Bereiche zwischen den durchgehenden Löcher 121.

### Figuren 6 bis 8

Die dargestellte Gaskanalplatte 11 weist einen zur Gewährleistung eines genügenden Abflusses von eventuell kondensierten Lösungsmitteln bis zum geschlossenen Ende, vom offenen Ende her leicht ansteigenden zentralen Gaskanal 112 auf, von dem aus sich Gaskanallöcher 113 zu der der Funktionsplatte 12 zugewandten Plattenoberfläche erstrecken. Die durchgehenden Löcher 111 sind in zwei parallelen Reihen entsprechend den durchgehenden Löchern 132 der Gegenplatte 13 und den durchgehenden Löchern 142 der Stützplatte 14 und die Schraubenlöcher 114 entsprechend den Schraubenlöchern 131 bzw. 141 dieser Platten angeordnet. Mit 115 sind Schraubenlöcher zur Befestigung der Stirnplatte 16 bezeichnet.

Am offenen Ende des Gaskanals 112 wird vorzugsweise ein Mehrfachventil angebracht, z.B. eingeschraubt, an das eine entsprechende Anzahl Vakuumpumpen und Einrichtungen zur Zuführung von einem oder mehreren Gasen angeschlossen ist. In den Reaktionsgefässen 5 kann dann ein Unter- oder Überdruck erzeugt und/oder es können den Reaktionsgefässen 5 verschiedenste Gase zugeführt werden. Auf diese Weise können die mit den Funktionsplattenfunktionen erreichbaren Atmosphären bzw. Bedingungen in den Reaktionsgefässen 5 vervielfacht werden.

### Figuren 9 und 10

Die gezeigte Kupplung 4 umfasst einen schaltblockseitigen Teil 41 und einen reaktionsgefässseitigen Teil 42, zwischen denen ein Faltbalg 43 angeordnet ist, der dafür sorgt, dass der reaktionsgefässseitige Teil 42 gegenüber dem schaltblockseitigen Teil 41 beweglich ist. Der schaltblockseitige Teil 41 ist mit einem Gewinde 411 versehen, so dass die Kupplung 4 an ein in seinem unteren Teil mit einem Innengewinde versehenes durchgehendes Loch 111 der Gaskanalplatte 11 geschraubt werden kann. Der reaktionsgefässseitige Teil 42 umfasst einen Fixierbereich 421 für das Anbringen von Befestigungsklammern und einen Normschliff 422 zur lösbaren Fixierung eines Reaktionsgefässes 5 oder eines Rückflusskühlers.

Die Kupplung 4 besteht beispielsweise aus Teflon.

### Figur 11

Der dargestellte Rückflusskühler 6 weist in seinem oberen Bereich eine Normschliffinnenfläche 62 zur lösbaren Befestigung des Rückflusskühlers 6 am Normschliff 422 einer Kupplung 4 und in seinem unteren Bereich eine Normschliffaussenfläche 63 zur lösbaren Befestigung eines Reaktionsgefässes 5 auf. Er umfasst ausserdem ein Kühlrohr 61, das so weit in das Reaktionsgefäss 5 hineinreicht, dass im Reaktionsgefäss 5 unterhalb des Verbindungsbereichs 51 von Reaktionsgefäss und Rückflusskühler gekühlt werden kann. Damit wird erreicht, dass die Gasphase relativ weit unten im Reaktionsgefäss 5 kondensiert und das Kondensat im Reaktionsgefäss 5 verbleibt.

Das Kühlrohr 61 ist im Öffnungsquerschnitt des Reaktionsgefässes 5 asymetrisch angeordnet, d.h. gegenüber der Rückflusskühlermitte nach aussen hin verschoben, um Platz für die Einführung eines Zuführ- und/oder Entnahmewerkzeugs oder die Zugabe z.B. eines Schutzgases, gasförmigen Reaktanden, gasförmigen Katalysators oder eines Feststoffes etc. in das Reaktionsgefäss 5 zu schaffen. Die Zu- und Wegführung des Kühlmediums, z.B. Wasser, erfolgt gemäss den Pfeilen B bzw. C mittels flexibler Zu- und Wegführleitungen, die derart angeordnet und mit den Zu- und Wegführleitungen der Rückflusskühler 6 weiterer Reaktionsgefässe 5 verbunden sind, dass ihr Platzbedarf minimiert wird.

### Figur 12

Bei der erfindungsgemässen Vorrichtung können prinzipiell viele verschiedene Arten von Reaktionsgefässen 5 verwendet werden, die aber alle über eine Verbindungsmöglichkeit, wie z.B. Normschliff, zur lösbaren Befestigung des Reaktionsgefässes 5 z.B. an einem Rückflusskühler 6 oder einer Kupplung 4 verfügen. Die Form und die aufnehmbaren Volumina der Reaktionsgefässe 5 können abhängig vom verfügbaren Platz und der gewünschten Anzahl an nebeneinander eingesetzten Reaktionsgefässen 5 in einem weiten Bereich variiert werden. So kommen z.B. zylinderförmige Reaktionsgefässe 5 mit rundem oder flachem Boden, Rundkölbchen, Spitzkölbchen etc., insbesondere mit aufnehmbaren Volumina von 0,5 ml - 200 ml, in Betracht.

Es können auch Reaktionsgefässe verwendet werden, an die eine zusätzliche Kammer mit einem Eingang und einem Ausgang angeschmolzen ist. Diese Kammern sind als Kühl- oder Heizkammern einsetzbar und vorzugsweise in platzsparender Weise miteinander verbunden.

Hier dargestellt sind zwei mit einem Rohr 52 verbundene Reaktionsgefässe 5, 5', die zur Filtration verwendet werden können. Das erste Ende des Rohres 52 ragt in den oberen Bereich des Reaktionsgefässes 5' hinein, während das zweite Ende in eine Fritte 53, z.B. Glasfritte, im Bodenbereich des Reaktionsgefässes 5 eingeschmolzen ist. Durch Druckerzeugung im Reaktionsgefäss 5 gemäss Pfeil D und/oder Vakuumerzeugung im Reaktionsgefäss 5' gemäss Pfeil E kann durch die Fritte 53 hindurch eine Filtration vorgenommen werden.

Auch die Reaktionsgefässe 5 und 5' können mit zusätzlichen Kühl- oder Heizkammern versehen und/oder mit Rückflusskühlern 6 kombiniert werden. Grundsätzlich sind verschiedenartigste Kombinationen dieser Elemente mit allen möglichen Reaktionsgefässarten denkbar.

### Figur 13

Das vorliegende Ausführungsbeispiel einer erfindungsgemässen Vorrichtung weist fünf Schaltblöcke 1 auf, unter denen eine Schütteleinrichtung 7 angeordnet ist. Der Zugang zum Gaskanal 112 der jeweiligen Gaskanalplatte 11 wird durch Mehrfachventile 3 geregelt, über die entweder mittels einer Vakuumpumpe 2 ein Unterdruck erzeugt oder mittels einer Einrichtung 22 zur Zuführung oder Entnahme von Gas zugeführt oder entnommen werden kann. Beim dargestellten Ausführungsbeispiel enthält die Gaszuführ- und -entnahmeeinrichtung 22 einen Tank 23 für ein gasförmigen Stoff, z.B. Argon, Wasserstoff etc.

Zur Versorgung der Kühlrohre 61 der Rückflusskühler 6 und der aufgeschmolzenen Kühlkammern der Reaktionsgefässe mit Kühlmedien sind zwei Kryostaten 9 bzw. 29 vorgesehen.

Das Handling der Ausgangsstoffe oder Produkte erfolgt mittels einer Einrichtung 21 zur Zuführung und Entnahme von Flüssigkeiten und/oder Feststoffen, die eine oder mehrere hohle Nadeln oder andere Zuführ- und/oder Entnahmewerkzeuge umfasst. Die Ausgangsstoffe oder Produkte sind zum Teil in Gefässen gelagert, die im Gefässgestell 25 angeordnet sind. Lösungsmittel- oder Lösungszapfstellen 28 ermöglichen eine Entnahme von Lösungsmitteln oder Lösungen aus Tanks.

Eine Steuereinheit 8, z.B. PC, dient zur Steuerung der Zuführung und Entnahme von Flüssigkeiten, Gasen und/oder Feststoffen, d.h. der Einrichtung 21 zur Zuführung und Entnahme von Flüssigkeiten und/oder Feststoffen, der Einrichtung 22 zur Zuführung und Entnahme von Gasen, der Vakuumpumpe 2, der Mehrfachventile 3 und der Funktionsplatten 12 bzw. deren Motoren 15, sowie der Schütteleinrichtung 7 und der Kryostaten 9 und 29.

Zu der vorbeschriebenen Vorrichtung zur parallelen Durchführung einer Vielzahl von chemischen, biochemischen oder physikalischen Verfahren sind weitere konstruktive Variationen realisierbar. Hier ausdrücklich erwähnt sei noch, dass die Verbindungen zwischen den Kupplungen 4, Rückflusskühlern 6 und Reaktionsgefässen 5 nicht unbedingt über Normschliffe erfolgen müssen, sondern beispielsweise auch Gewinde, Planschliffe etc. vorgesehen sein können.

Die erfindungsgemässe Vorrichtung ermöglicht die Automation einer sehr breiten Palette von chemischen, biochemischen oder physikalischen Verfahren bzw. derer einzelnen Verfahrensschritte. Es können eine grosse Anzahl verschiedener, gleicher oder ähnlicher Verfahren parallel, seriell, gleichzeitig oder zeitverschoben durchgeführt werden.

## Patentansprüche

1. Vorrichtung zur parallelen Durchführung einer Vielzahl von chemischen, biochemischen oder physikalischen Verfahren, mit mindestens einem Schaltblock (1), an dem eine Vielzahl von Reaktionsgefässen (5,5') abnehmbar oder fix befestigt sind, wobei den Reaktionsgefässen (5,5') durch den Schaltblock (1) hindurch Flüssigkeiten, Gase und/oder Feststoffe zuführbar und/oder entnehmbar sind, **dadurch gekennzeichnet, dass** der Schaltblock (1) mindestens eine Gaskanalplatte (11) mit mindestens einem Gaskanal (112) und mindestens eine benachbarte Funktionsplatte (12) umfasst, wobei mindestens eine dieser Platten bezüglich der anderen verschiebbar angeordnet ist und die Gaskanalplatte (11) bzw. -platten und die Funktionsplatte (12) bzw. -platten durchgehende Löcher (111, 121), durchgehende Schlitze und/oder Vertiefungen (122) aufweisen, die jeweils bei mindestens einer Plattenstellung einander so gegenüberliegen, dass
a) zumindest einem Reaktionsgefäss (5,5') über den bzw. mindestens einen Gaskanal (112) Gase und/oder Flüssigkeiten zuführbar oder entnehmbar sind bzw.
b) zumindest einem Reaktionsgefäss (5,5') sowohl durch die bzw. mindestens eine Gaskanalplatte (11) als auch durch die bzw. mindestens eine Funktionsplatte (12) hindurch Gase, Flüssigkeiten und/oder Feststoffe zuführbar oder entnehmbar sind.

2. Vorrichtung nach Anspruch 1, **dadurch gekennzeichnet, dass** bei mindestens einer Plattenstellung die durchgehenden Löcher (111,121), durchgehenden Schlitze und/oder Vertiefungen (122) der bzw. mindestens einer Gaskanalplatte (11) und der bzw. mindestens einer Funktionsplatte (12) einander so gegenüberliegen, dass zumindest einem Reaktionsgefäss (5,5') über den bzw. mindestens einen Gaskanal (112) Gase und/oder Flüssigkeiten und gleichzeitig sowohl durch die Gaskanalplatte (11) bzw. -platten als auch durch die Funktionsplatte (12) bzw. -platten hindurch Flüssigkeiten und/oder Feststoffe zuführ- oder entnehmbar sind.

3. Vorrichtung nach Anspruch 1 oder 2, **dadurch gekennzeichnet, dass** sie genau eine Funktionsplatte (12) und eine Gaskanalplatte (11) aufweist, wobei die Funktionsplatte (12) zwischen der Gaskanalplatte (11) und einer Gegenplatte (13) angeordnet ist.

4. Vorrichtung nach einem der Ansprüche 1 bis 3, **dadurch gekennzeichnet, dass** auf der bzw. einer Funktionsplatte (12) oder auf der Gegenplatte (13) ein Septum aus einem mit einer Nadel durchdringbaren Material angeordnet ist.

5. Vorrichtung nach einem der Ansprüche 1 bis 4, **dadurch gekennzeichnet, dass** sie einen Antrieb, insbesondere Schrittmotor (15), zur Verschiebung der Funktionsplatte (12) bzw. -platten aufweist.

6. Vorrichtung nach einem der Ansprüche 1 bis 5, **dadurch gekennzeichnet, dass** zur Erzeugung eines Unterdrucks in den Reaktionsgefässen (5,5') eine Vakuumpumpe (2) über ein Ventil (3) an den Gaskanal (112) angeschlossen ist, wobei das Ventil (3) ein Mehrfachventil sein kann, über das der Gaskanal (112) und die Reaktionsgefässe (5,5') mit mindestens einem Gas beschickbar sind.

7. Vorrichtung nach einem der Ansprüche 1 bis 6, **dadurch gekennzeichnet, dass** die Reaktionsgefässe (5,5') mittels beweglicher Kupplungen (4) am Schaltblock (1) befestigt sind, wobei die Kupplungen (4) zwischen einem reaktionsgefässseitigen Teil (42) und einem schaltblockseitigen Teil (41) einen Faltbalg (43), ein flexibles Rohr oder ein Kugelgelenk aufweisen können.

8. Vorrichtung nach einem der Ansprüche 1 bis 7, **dadurch gekennzeichnet, dass** zwischen mindestens einem der Reaktionsgefässe (5) und dem Schaltblock (1) ein abnehmbarer Rückflusskühler (6) angeordnet ist, der ein Kühlrohr (61) aufweist, das so weit in das Reaktionsgefäss (5) hineinreicht, dass im Reaktionsgefäss (5) im Verbindungsbereich (51) von Reaktionsgefäss und Rückflusskühler oder unterhalb davon gekühlt werden kann.

9. Vorrichtung nach Anspruch 8, **dadurch gekennzeichnet, dass** das Kühlrohr (61) nur in der einen Hälfte des Öffnungsquerschnitts des Reaktionsgefässes (5) angeordnet ist.

10. Vorrichtung nach einem der Ansprüche 1 bis 9, **dadurch gekennzeichnet, dass** zwei der Reaktionsgefässe (5,5') mit einem Rohr (52) verbunden sind, dessen erstes Ende in das eine Reaktionsgefäss (5') hineinragt und dessen zweites Ende in eine Fritte (53) im anderen Reaktionsgefäss (5) eingeschmolzen ist.

11. Vorrichtung nach einem der Ansprüche 1 bis 10, **dadurch gekennzeichnet, dass** sie eine Schütteleinrichtung (7) und/oder eine Rühreinrichtung aufweist, mit der die Reaktionsgefässe (5,5') während der Zuführung oder Entnahme von Flüssigkeiten, Gasen und/oder Feststoffen schüttel-bzw. rührbar sind.

12. Vorrichtung nach einem der Ansprüche 1 bis 11, **dadurch gekennzeichnet, dass** sie eine Einrichtung (21,22) zur Zuführung und Entnahme von Flüssigkeiten, Gasen und/ oder Feststoffen aufweist, die eine oder mehrere hohle Nadeln umfasst.

13. Vorrichtung nach einem der Ansprüche 1 bis 12, **dadurch gekennzeichnet, dass** sie eine Steuereinheit (8) zur Steuerung der Zuführung und Entnahme von Flüssigkeiten, Gasen und/oder Feststoffen, der Funktionsplatte bzw. -platten (12) oder deren Motoren, des Ventils bzw. der Ventile (3), der Schütteleinrichtung (7) bzw. -einrichtungen und/oder eines oder mehrerer Kryostaten (9,29) aufweist.

## Claims

1. Device for carrying out a multiplicity of chemical, biochemical or physical processes in parallel, having at least one switching block (1) to which are fastened a multiplicity of reaction vessels (5, 5') in a removable or fixed manner, it being possible for liquids, gases and/or solids to be supplied to and/or extracted from the reaction vessels (5, 5') through the switching block (1), **characterized in that** the switching block (1) comprises at least one gas duct plate (11) with at least one gas duct (112) and at least one adjacent functional plate (12), at least one of these plates being arranged so that it can be displaced relative to the other and the gas duct plate (11) or plates and the functional plate (12) or plates have through-holes (111, 121), through-slots and/or depressions (122), which are respectively located opposite to one another in at least one plate position in such a way that
a) gases and/or liquids can be supplied to or extracted from at least one reaction vessel (5, 5') via the gas duct (112) or via at least one gas duct (112) and
b) gases, liquids and/or solids can be supplied to or extracted from at least one reaction vessel (5, 5') both through the gas duct plate (11) or through at least one gas duct plate (11) and through the functional plate (12) or through at least one functional plate (12).

2. Device according to Claim 1, **characterized in that** in the case of at least one plate position, the through-holes (111, 121), through-slots and/or depressions (122) of the gas duct plate (11) or of at least one gas duct plate (11) and of the functional plate (12) or of at least one functional plate (12) are located opposite to one another in such a way that gases and/or liquids can be supplied to or extracted from at least one reaction vessel (5, 5') via the gas duct (112) or via at least one gas duct (112) and, at the same time, liquids and/or solids can be supplied or extracted both through the gas duct plate (11) or plates and through the functional plate (12) or plates.

3. Device according to Claim 1 or 2, **characterized in that** it has exactly one functional plate (12) and one gas duct plate (11), the functional plate (12) being arranged between the gas duct plate (11) and a backplate (13).

4. Device according to one of Claims 1 to 3, **characterized in that** a septum composed of a material which can be penetrated by a needle is arranged on the or on a functional plate (12) or on the backplate (13).

5. Device according to one of Claims 1 to 4, **characterized in that** it has a drive, in particular a stepper motor (15), for displacing the functional plate (12) or plates.

6. Device according to one of Claims 1 to 5, **characterized in that** a vacuum pump (2) is connected via a valve (3) to the gas duct (112) in order to generate a vacuum in the reaction vessels (5, 5'), the valve (3) being possibly a multiple valve, by means of which the gas duct (112) and the reaction vessels (5, 5') can be charged with at least one gas.

7. Device according to one of Claims 1 to 6, **characterized in that** the reaction vessels (5, 5') are fastened to the switching block (1) by means of movable connectors (4), the connectors (4) possibly having a bellows (43), a flexible tube or a ball joint between a part (42) at the reaction vessel end and a part (41) at the switching block end.

8. Device according to one of Claims 1 to 7, **characterized in that** a removable reflux condenser (6) is arranged between at least one of the reaction vessels (5) and the switching block (1), which reflux condenser (6) has a cooling tube (61), which extends sufficiently far into the reaction vessel (5) for cooling to take place in the reaction vessel (5) in the reaction vessel and reflux condenser connection region (51) or below it.

9. Device according to Claim 8, **characterized in that** the cooling tube (61) is arranged in only one half of the cross section of the opening of the reaction vessel (5).

10. Device according to one of Claims 1 to 9, **characterized in that** two of the reaction vessels (5, 5') are connected by a tube (52), the first of whose ends protrudes into one reaction vessel (5') and the second of whose ends is melted into a frit (53) in the other reaction vessel (5).

11. Device according to one of Claims 1 to 10, **characterized in that** it has a shaking device (7) and/or a stirring device, by means of which the reaction vessels (5, 5') can be shaken or stirred during the supply or extraction of liquids, gases and/or solids.

12. Device according to one of Claims 1 to 11, **characterized in that** it has a device (21, 22) for the supply and extraction of liquids, gases and/or solids, which device comprises one or a plurality of hollow needles.

13. Device according to one of Claims 1 to 12, **characterized in that** it has a control unit (8) for controlling the supply and extraction of liquids, gases and/or solids, for controlling the functional plate or plates (12) or their motors, for controlling the valve or the valves (3), for controlling the shaking device (7) or devices and/or for controlling one or a plurality of cryostatic temperature regulators (9, 29).

## Revendications

1. Dispositif destiné à l'exécution en parallèle d'une pluralité de procédés chimiques, biochimiques ou physiques, avec au moins un bloc de commutation (1), auquel est fixée, de manière amovible ou fixe, une pluralité de réacteurs (5, 5'), des liquides, des gaz et/ou des substances solides pouvant être amenés aux réacteurs (5, 5') et/ou en être évacués à travers le bloc de commutation (1), **caractérisé en ce que** le bloc de commutation (1) comprend au moins une plaque d'arrivée de gaz (11) avec au moins une arrivée de gaz (112) et au moins une plaque de fonction voisine (12), au moins une de ces plaques étant disposée de manière à pouvoir être déplacée par rapport à l'autre plaque et la plaque d'arrivée de gaz (11), respectivement les plaques d'arrivée de gaz et la plaque de fonction (12), respectivement les plaques de fonction présentant des trous traversants (111, 121) des fentes traversantes et/ou des enfoncements (122), qui sont situés les uns en face des autres chaque fois de manière telle que, pour au moins une position des plaques,
a) l'on puisse amener à au moins un réacteur (5, 5'), respectivement en évacuer, par l'intermédiaire de l'arrivée de gaz ou d'au moins une arrivée de gaz (112), des gaz et/ou des liquides, respectivement
b) l'on puisse amener à au moins un réacteur (5, 5'), respectivement en évacuer, non seulement à travers la plaque d'arrivée de gaz ou au moins une plaque d'arrivée de gaz (11), mais aussi à travers la plaque de fonction ou au moins une plaque de fonction (12), des gaz, des liquides et/ou des substances solides.

2. Dispositif selon la revendication 1, **caractérisé en ce que**, pour au moins une position des plaques, les trous traversants (111, 121), les fentes traversantes et/ou les enfoncements (122) de la ou d'au moins une plaque d'arrivée de gaz (11) et de la ou d'au moins une plaque de fonction (12) sont placés les uns en face des autres de manière que l'on puisse amener à au moins un réacteur (5, 5'), respectivement en évacuer, par l'intermédiaire de la ou d'au moins une arrivée de gaz (112), des gaz et/ou des liquides, et simultanément, non seulement à travers la ou les plaques d'arrivée de gaz (11), mais aussi à travers la ou les plaques de fonction (12), des liquides et/ou des substances solides.

3. Dispositif selon la revendication 1 ou 2, **caractérisé en ce qu'**il présente exactement une plaque de fonction (12) et une plaque d'arrivée de gaz (11), la plaque de fonction (12) étant disposée entre la plaque d'arrivée de gaz (11) et une contre-plaque (13).

4. Dispositif selon l'une quelconque des revendications 1 à 3, **caractérisé en ce que** l'on dispose un septum, fait d'un matériau que l'on peut percer à l'aide d'une aiguille, sur la ou sur une plaque de fonction (12) ou sur la contre-plaque (13).

5. Dispositif selon l'une quelconque des revendications 1 à 4, **caractérisé en ce qu'**il présente un entraînement, en particulier un moteur pas à pas (15), destiné au déplacement de la plaque de fonction (12) ou des plaques de fonction.

6. Dispositif selon l'une quelconque des revendications 1 à 5, **caractérisé en ce que** l'on raccorde une pompe à vide (2) à l'arrivée de gaz (112), par l'intermédiaire d'une vanne (3), en vue de la production d'une dépression dans les réacteurs (5, 5'), la vanne (3) pouvant être une vanne à plusieurs voies, grâce à laquelle l'on peut charger l'arrivée de gaz (112) et les réacteurs (5, 5') avec au moins un gaz.

7. Dispositif selon l'une quelconque des revendications 1 à 6, **caractérisé en ce que** les réacteurs (5, 5') sont fixés au bloc de commutation (1) à l'aide de dispositifs d'accouplement mobiles (4), les dispositifs d'accouplement (4) entre une pièce (42) faisant face au réacteur et une pièce (41) faisant face au bloc de commutation pouvant présenter un soufflet (43), un tuyau souple ou une articulation à rotule.

8. Dispositif selon l'une quelconque des revendications 1 à 7, **caractérisé en ce que** l'on dispose, entre au moins un des réacteurs (5) et le bloc de commutation (1), un condenseur à reflux amovible (6), qui présente un tuyau de refroidissement (61), qui pénètre dans le réacteur (5) jusqu'à un point permettant de procéder à un refroidissement dans le réacteur (5) dans le domaine de raccordement (51) du réacteur et du condenseur à reflux ou en un endroit situé en dessous de ce domaine.

9. Dispositif selon la revendication 8, **caractérisé en ce que** le tuyau de refroidissement (61) n'est disposé que dans l'une des moitiés de la section transversale d'ouverture du réacteur (5).

10. Dispositif selon l'une quelconque des revendications 1 à 9, **caractérisé en ce que** deux des réacteurs (5, 5') sont reliés à l'aide d'un tuyau (52), dont la première extrémité fait saillie dans l'un des réacteurs (5') et dont la deuxième extrémité est fixée par fusion dans une fritte (53) dans l'autre réacteur (5).

11. Dispositif selon l'une quelconque des revendications 1 à 10, **caractérisé en ce qu'**il présente un équipement secoueur (7) et/ou un équipement d'agitation, grâce auquel l'on peut secouer ou agiter les réacteurs (5, 5') pendant l'apport ou l'évacuation de liquides, de gaz et/ou de substances solides.

12. Dispositif selon l'une quelconque des revendications 1 à 11, **caractérisé en ce qu'**il présente un équipement (21, 22) destiné à l'apport et à l'évacuation de liquides, de gaz et/ou de substances solides, lequel équipement comprend une ou plusieurs aiguilles creuses.

13. Dispositif selon l'une quelconque des revendications 1 à 12, **caractérisé en ce qu'**il présente une unité de commande (8) destinée à la commande de l'apport et de l'évacuation de liquides, de gaz et/ou de substances solides, de la ou des plaques de fonctions (12) ou de leurs moteurs, de la vanne ou des vannes (3), de l'équipement ou des équipements secoueurs (7) et/ou d'un ou de plusieurs cryostats (9, 29).
